# EUROPEAN PATENT APPLICATION

(11) **EP 4 606 686 A1**
(43) Date of publication of application: **27.08.2025**
(21) Application number: 25159380.2
(22) Date of filing: 21.02.2025
(51) Int. Cl.: B62H 3/00

(54) **EXTENDABLE BICYCLE PARKING FACILITY PROVIDED WITH A PLURALITY OF LEANING GATES**

(30) Priority: 21.02.2024 NL 2037090
(71) Applicant: Kooymans Beheer BV, 4285 BE Woudrichem (NL)
(72) Inventor: KOOIJMANS, Antonius Gerardus Petrus Johannes, 4285 BG Woudrichem (NL)
(74) Representative: Verhees, Godefridus Josephus Maria

(57) **Abstract**

A bicycle parking facility 11 has a number of leaning gates 12, each of which has an upright 13 and a foot 14 attached thereto. The foot has two elongated foot parts 16 that are parallel to each other and are connected to each other via a connecting piece 17. The bicycle parking facility 11 also has a bench 18 in which the leaning gates 12 can be stored. The foot parts 16 are provided with a guide element 15 that is slidable over the foot parts 16 of an adjacent leaning gate 12. The feet 14 of the leaning gates 12 have a different width from each other, so that the leaning gates 12 can be nested in each other. The leaning gates 12 are movable between a storage position, in which the leaning gates are slid into each other, and an operational position, in which the leaning gates are slid apart and bicycles can be placed against the uprights 13.

## Description

### Technical field of the invention

The invention relates to a bicycle parking facility comprising a plurality of leaning gates against which bicycles can be placed, which leaning gates each comprise an upright and a foot to which the uprights are attached, which leaning gates are movable between an operational position in which bicycles can be placed against the uprights and a storage position in which no bicycles can be placed against the uprights.

Often, facilities for parking a large number of bicycles at a location are only needed temporarily, for example during an event. The rest of the time there is no need for the possibility of being able to park many bicycles. As a result, there is a need for parking facilities that can be installed and removed quickly and easily.

### Background of the invention

A bicycle parking facility according to the preamble of claim 1 is known from TW M516542U. This known bicycle parking device has one foot to which all the uprights are hinged. The uprights can be folded away into the foot to the storage position or folded up out of the foot to the operational position.

A disadvantage of this known bicycle parking device is that it can quickly become unusable due to rough use or vandalism because the uprights are dislocated and can no longer fold away into the foot.

### Summary of the invention

An object of the invention is to provide a bicycle parking device that is robust and can be installed and stored quickly and easily. To this end, the bicycle parking device according to the invention is characterised in that it comprises a plurality of feet of which the aforementioned foot forms part, whereby each leaning gate comprises a separate foot that is attached to the upright, and whereby the feet can be slid past each other. By designing the bicycle parking device in such a way that the leaning gates can be slid in and out of each other, they take up little space in the retracted position and can be easily stored and/or transported. Furthermore, the interlocked leaning gates can be easily and quickly slid apart so that they can function for parking bicycles against and between them.

An embodiment of the bicycle parking device according to the invention is characterised in that each foot is provided with at least one guide element that can slide in or over the foot of an adjacent leaning gate. This keeps the leaning gates connected to each other so that they are difficult to fall over or shift. Furthermore, this makes it easy to slide the leaning gates in and out of each other.

The guide element is preferably configured in such a way that it can only slide in or over the foot of an adjacent leaning gate but cannot twist relative to the foot of an adjacent leaning gate, so that the leaning gates cannot be lifted separately and vandalism is made more difficult.

The foot is preferably located on one side of the upright so that the leaning gates can be compactly slid together.

For good stability, each foot preferably has two elongated foot parts, each of which is attached to the upright with a first end at a distance from each other.

The elongated foot parts can be parallel to each other, with the second ends of the foot parts being loose and at a distance from each other. This allows the leaning gates to be identical to each other and still be able to slide in and out of each other. In this case, each leg of a railing is located, for example, on the left side of a leg of an adjacent railing.

The elongated foot parts can be attached directly to each other with the second end, with the foot parts extending in a V-shape. This also allows the leaning gates to be identical to each other and still be able to slide in and out of each other.

The elongated foot parts can be attached to each other with a connecting piece at the second end, with the foot parts being parallel to each other, for example. In order to be able to slide such leaning gates into each other, they must all have a different width so that the foot of a railing can be slid between the foot parts of a foot of an adjacent railing. If the height of the leaning gates also differs from each other, the leaning gates can be slid into each other even more compactly

The upright of each railing is preferably U-shaped, with the ends of the legs attached to the foot.

Preferably, parts of the uprights are detachably attached to each other so that the uprights are interrupted in order to be able to remove bicycles tied with a chain lock, if necessary.

A further embodiment of the bicycle parking facility according to the invention is characterised in that the bicycle parking facility also comprises a piece of street furniture in which the leaning gates are present in storage position. The street furniture can be, for example, a bench, planter, a column, etc. The street furniture is preferably permanently present. The leaning gates do not have to be removed and moved every time, but can be slid into a storage space present in the street furniture and, if necessary, quickly extended to the operational position.

### Brief description of the drawings

The invention will be explained in more detail below using an exemplary embodiment of the bicycle parking device according to the invention shown in the drawings. Here:
Figure 1 shows a first embodiment of the bicycle parking device according to the invention in perspective;
Figure 2 shows a cross-section of the feet of the leaning gates along line II-II in figure 1;
Figure 3 shows the bicycle parking device in top view with the leaning gates in a slid-in position;
Figure 4 shows the bicycle parking device in top view with the leaning gates in an extended position;
Figure 5 two separated leaning gates of the bicycle parking facility in longitudinal section with both leaning gates on the ground;;
Figure 6 the two leaning gates shown in figure 5 with the front leaning gate lifted;
Figure 7 a separate leaning gate shown in front view with a bicycle chain around the upright;
Figure 8 the leaning gate shown in figure 7 with the bicycle chain detached from the upright;
Figure 9 an enlarged detail of the attachment of parts of the upright of the leaning gate shown in figure 7;
Figure 10 the bicycle parking facility in side view with one of the leaning gates secured to the ground;
Figure 11 an enlarged detail of the anchoring of the leaning gate secured to the ground of the bicycle parking facility shown in the figure;
Figure 12 is a schematic representation of a second embodiment of the bicycle parking device according to the invention with the leaning gates in a stowed position in a bench seat;
Figure 13 is the bicycle parking device shown in figure 12 with the leaning gates in an operational, extended position;
Figure 14 is a schematic representation of a third embodiment of the bicycle parking device according to the invention in a stowed position in which the leaning gates differ in both width and height;
Figure 15 is the bicycle parking device shown in figure 14 with the leaning gates in an operational, extended position;
Figure 16 is a schematic representation of a fourth embodiment of the bicycle parking device according to the invention in a stowed position in which the legs of the feet are not attached to each other;
Figure 17 is the bicycle parking device shown in figure 16 with the leaning gates in an operational, extended position;
Figure 18 shows a schematic representation of a fifth embodiment of the bicycle parking device according to the invention in a slid-in storage position, with the feet directly attached to one end; and
Figure 19 shows the bicycle parking device shown in figure 18 with the leaning gates in the operational, extended position.

### Detailed description of the drawings

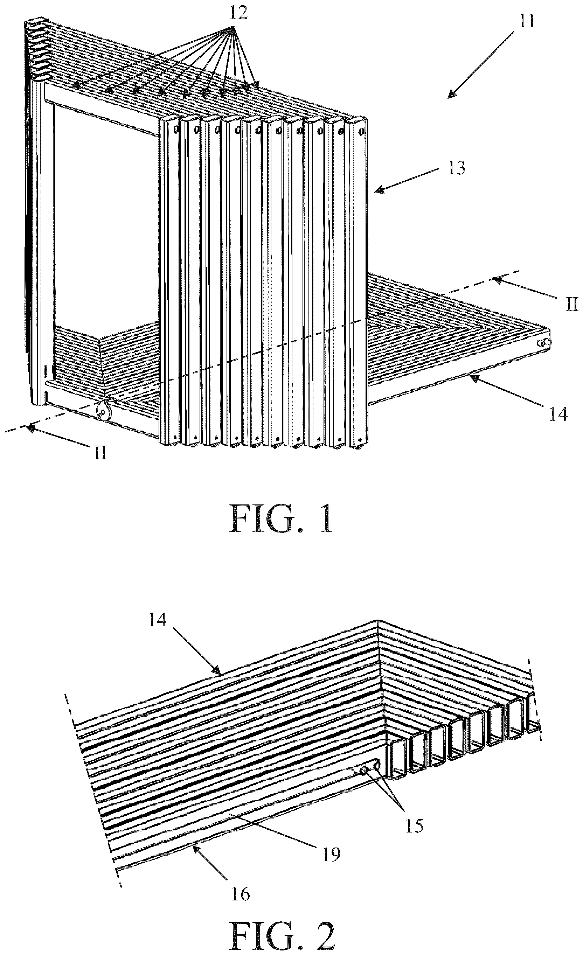

Figure 1 shows a first embodiment of the bicycle parking device 11 according to the invention, with the leaning gates 12 slid-in. The leaning gates 12 all have the same height but a different width. Each leaning gate 12 has an upright 13 and a foot 14 attached to it. Each foot 14 is U-shaped and has two parallel foot parts 16, of which the sides facing each other are provided with slots 19 and the sides facing away from each other are provided with guide elements 15 that can slide into the slots 19 of an adjacent leaning gate. This is made visible in figure 2 which shows a cross-section of the feet 14 of the leaning gates along line II-II in figure 1.

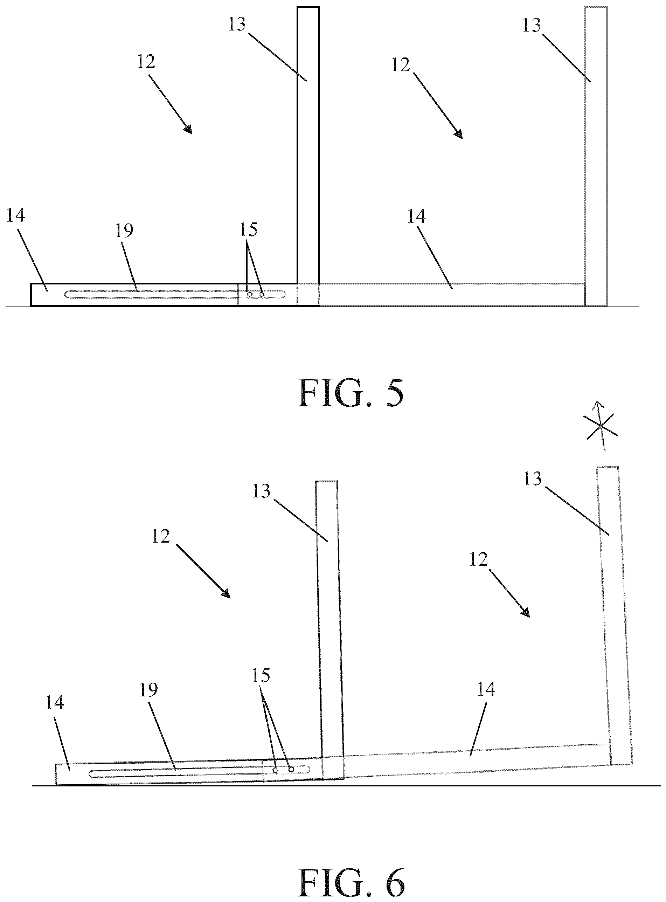

Each guide element 15 is formed by two parallel pins at a distance from each other. The pins 15, visible in figure 2, are attached with the visible ends to the outside of one of the foot parts of the foot that is not shown in this figure but is present within the feet shown. The pins 15 are slidable in the slot 19 present in the inward-facing side of one of the foot parts 16 of the adjacent foot 14. The guide element 15 formed by the pins can only slide in the longitudinal direction of the foot part 16 but cannot rotate relative to that foot part 16, so that the leaning gates 12 cannot be lifted individually, see figure 6.

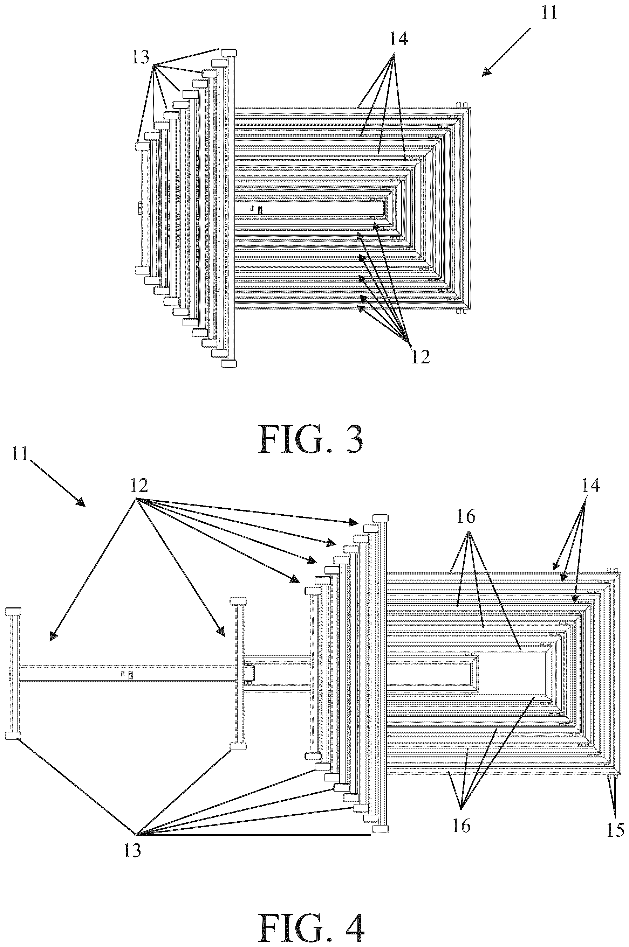

In figures 3 and 4 the bicycle parking facility 11 is shown in top view with the leaning gates 12 in a pushed together position and with a few leaning gates 12 in extended position respectively. In figures 5 and 6 two leaning gates 12 pushed apart are shown in longitudinal section. In the situation shown in figure 6, it appears that a leaning gate 12 cannot be picked up separately, but that when picking up a leaning gate, the other leaning gates must also be picked up.

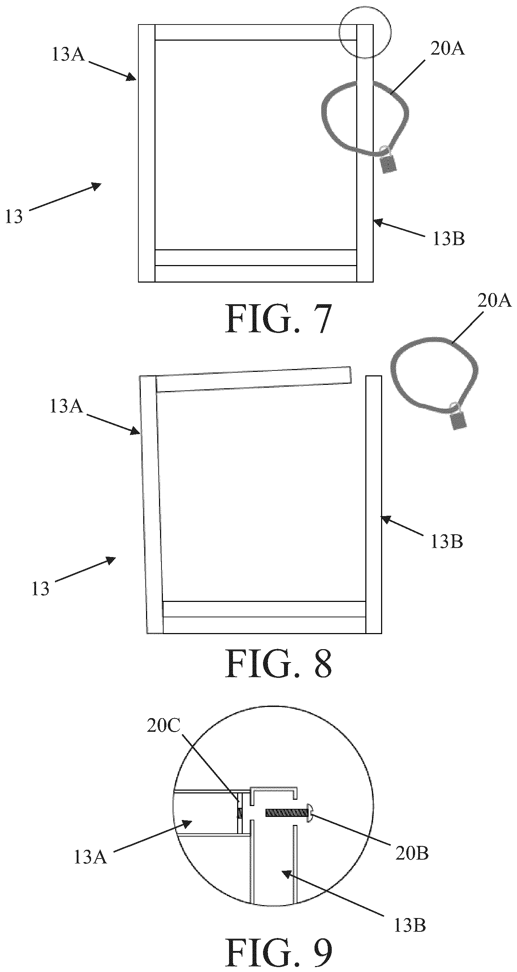

In figures 7 and 8, a separate leaning gate 12 of the bicycle parking facility is shown in front view with a bicycle chain 20A around the upright 13 and with a bicycle chain 20A detached from the upright 13, respectively. For this purpose, parts 13A and 13B of the upright 13 have been detached from each other so that an interruption has been created via which the bicycle chain 20A can be detached from the upright 13. In figure 9, the attachment of parts 13A and 13B of the upright 13 is shown in enlarged detail.

One of the parts 13B is provided with a large hole in the outward-facing wall through which the head of a bolt 20B can pass and is provided with a smaller hole in the inward-facing wall through which the head of the bolt 20B does not fit but through which the threaded part of the bolt 20B can protrude. The other part 13A of the upright 13 is provided with an insert 20C in which there is a threaded hole in which the bolt 20B can be turned. Due to this connecting construction, the parts 13A and 13B of the upright 13 can only be released from each other with a special key, making it more vandal-proof.

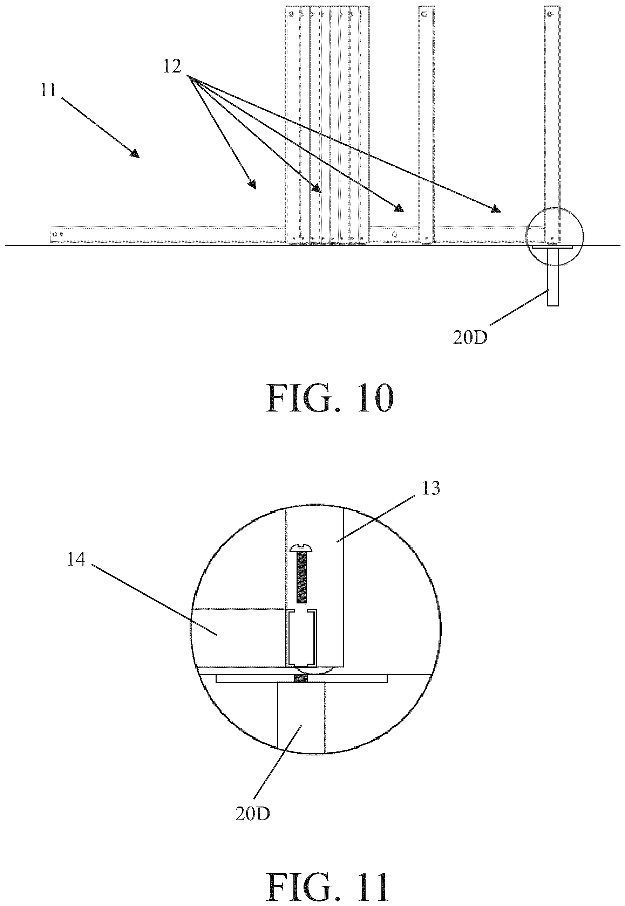

Figure 10 shows the bicycle parking facility 11 in side view, with one of the leaning gates 12 secured to the ground. The securing means are analogous to those with which the parts 13A and 13B of an upright 13 are secured to each other. Only the threaded hole is present in an anchor 20D fixed in the ground, see also figure 11 in which the anchoring is shown enlarged.

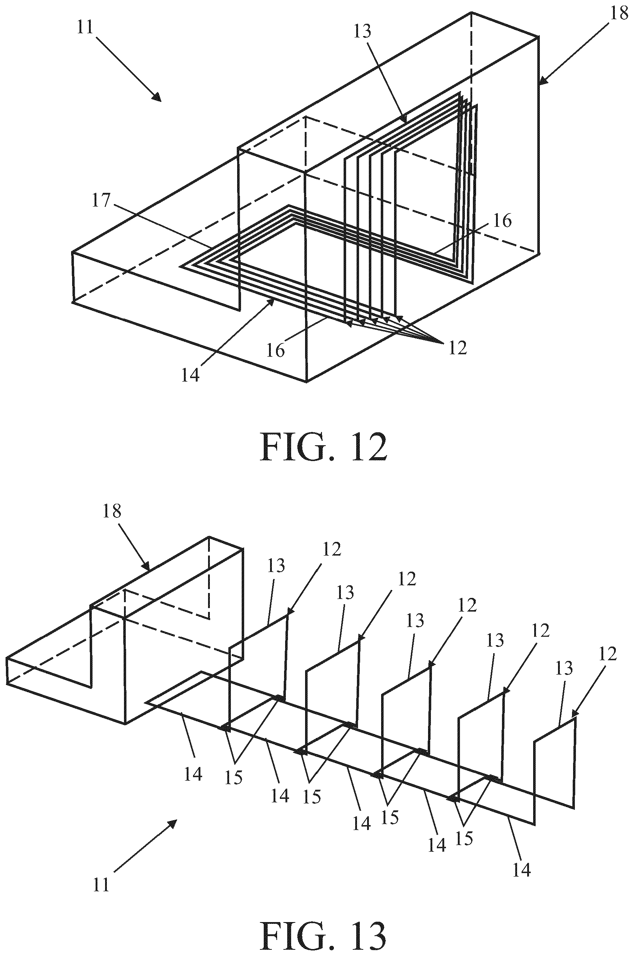

In figures 12 and 13 a second embodiment of the bicycle parking device according to the invention is shown schematically. In addition to the leaning gates, this embodiment also has a street furniture in which the leaning gates can be stored. Because the leaning gates are identical to those of the first embodiment, they are indicated with the same reference numerals. Five leaning gates 12 of the bicycle parking device 11 are shown in these figures, but there may also be more or fewer. The foot 14 of each railing 12 is completely present on one side of the upright 13 and has two elongated foot parts 16 that are parallel to each other and are each attached to the upright 13 with a first end at a distance from each other and are attached to each other with the second end via a connecting piece 17. The upright 13 is U-shaped, whereby the ends of the legs of the U-shape are attached to the first ends of the foot parts 16 of the foot 14.

In this embodiment, the street furniture is designed as a bench 18 in which the leaning rails 12 can be stored, see figure 12. Here too, both elongated foot parts 16 of each leaning rail 12, with the exception of the outermost leaning rail, are provided with a guide element 15 (only shown in figure 13 and omitted for clarity in figure 12) that can be slid over the foot parts 16 of an adjacent leaning rail 12 or in a guide that is attached to the foot parts or integrated in the foot parts. In this embodiment, the guide elements 15 are also formed by two parallel pins that are spaced apart and that can be slid in a slot that is present in the foot parts of an adjacent leaning rail.

The feet 14 of the leaning gates 12 also have a different width in this embodiment of the bicycle parking device. This means that the distance between the elongated foot parts 16 of the feet 14 is different and therefore also the length of the connecting pieces 17 are different, so that the feet 14 can be nested in each other. The uprights 13 also have a different width in this embodiment, but this does not have to be the case, they could also all have the same width, in which case the ends of the legs are then attached to the first ends of the foot parts via connecting elements. The uprights 13 do all have the same height in this embodiment.

The leaning gates 12 are movable between the storage position shown in figure 12, in which the leaning gates 12 are slid together with the feet 14 and no bicycles can be placed against the uprights 13, and an operational position shown in figure 13, in which the leaning gates 12 are slid apart and bicycles can be placed against the uprights 13.

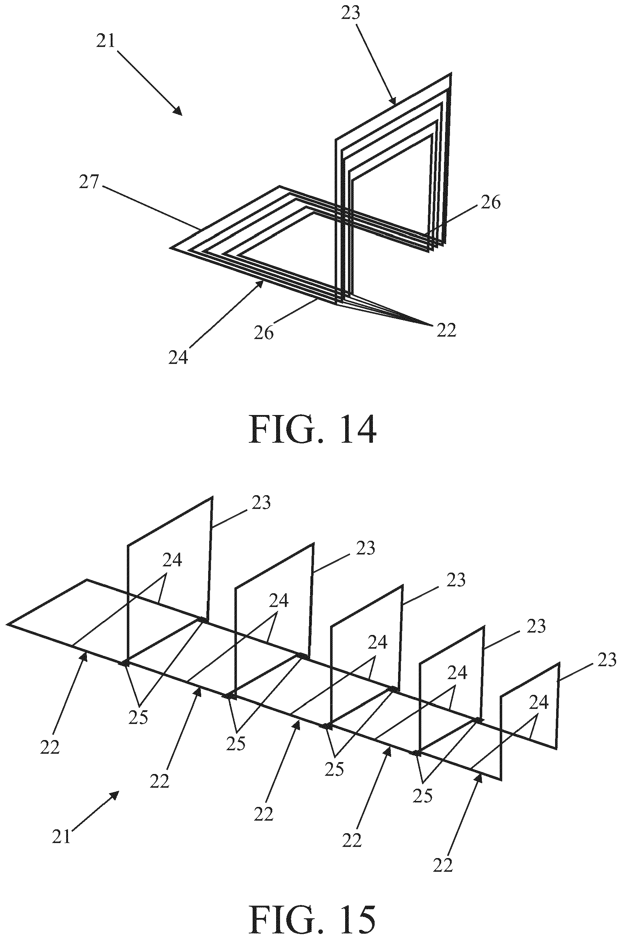

In figures 14 and 15 a third embodiment of the bicycle parking device according to the invention is shown schematically. This bicycle parking device 21 also has a number of leaning gates 22, each of which comprises an upright 23 and a foot 24 attached thereto. The foot 24 also has two elongated foot parts 26 that are parallel to each other and each, with a first end, are attached to the upright 23 and are attached to each other at the second end via a connecting piece 27. The upright 23 is also U-shaped, with the ends of the legs being attached to the first ends of the foot parts 26.

Here too, the elongated foot parts 26 of each leaning gate 22, with the exception of the outermost leaning gate, are provided with a guide element 25 that can be slid over the foot parts 26 of an adjacent leaning gate 22. Here too, the feet 14 have a different width. In contrast to the first embodiment, the uprights 23 in this second embodiment have a different height. This allows the leaning gates 22 of this second embodiment to be nested even more compactly, see figure 14. For this purpose, the length of the foot parts 26 of the leaning gates 22 must also be different from each other.

The leaning gates 22 can be slid apart from the storage position shown in figure 14, in which the leaning gates 22 with the feet 24 and uprights 23 are slid into each other, to the operational position shown in figure 15, in which bicycles can be placed against the uprights 23.

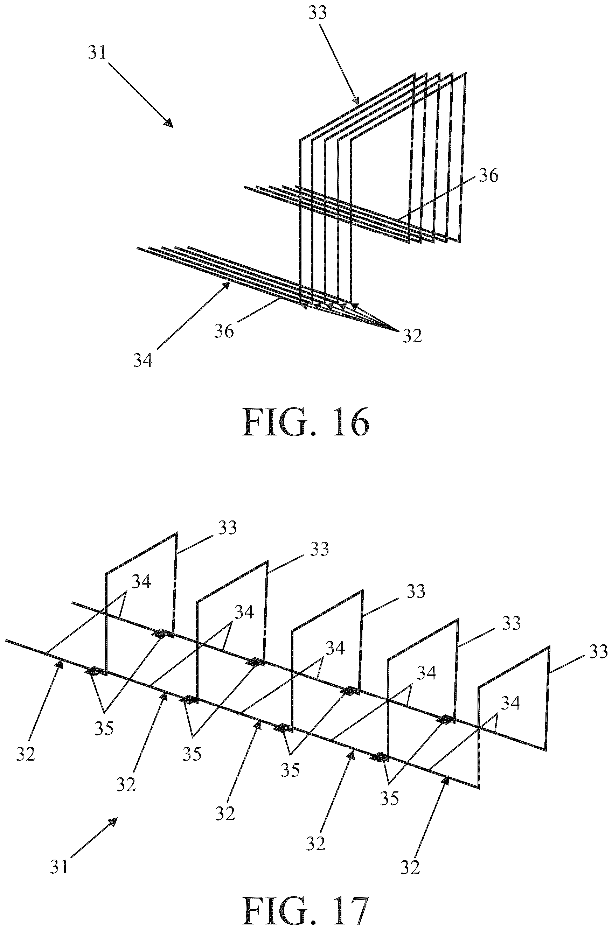

In figures 16 and 17 a fourth embodiment of the bicycle parking device according to the invention is shown schematically. This bicycle parking device 31 also has a number of leaning gates 32, each of which comprises an upright 33 and a foot 34 attached thereto. The foot 34 also has two elongated foot parts 36 that are parallel to each other and are each attached to the upright 33 with a first end. In contrast to the embodiments described above, in this bicycle parking device the elongated foot parts 36 are not connected to each other with the second end. This allows the feet 34 of the leaning gates 32 to be of equal width and length and yet be slid into each other as shown in figure 16. The upright 33 is also U-shaped, with the ends of the legs being attached to the first ends of the foot parts 36. The uprights 33 of the leaning gates 32 are of equal width and height.

Here too, the elongated foot parts 36 of each railing 32, with the exception of the outermost railing, are provided with a guide element 35 that can be slid over the foot parts 36 of an adjacent railing 32. The leaning gates 32 can now also be slid apart from the storage position shown in figure 16, in which the leaning gates 32 are slid into each other, to the operational position shown in figure 17, in which bicycles can be placed against the uprights 33.

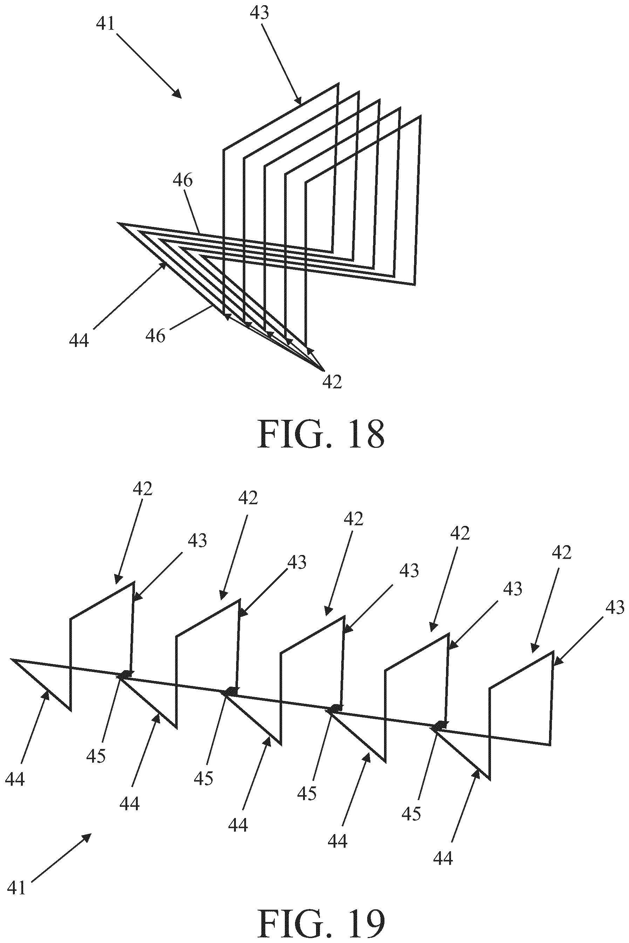

In figures 18 and 19 a fifth embodiment of the bicycle parking device according to the invention is shown schematically. This bicycle parking device 41 also has a number of leaning gates 42, each of which comprises an upright 43 and a foot 44 attached thereto. The foot 44 also has two elongated foot parts 46, which are in this embodiment not parallel to each other but extend in a V-shape, whereby the foot parts 46 are each attached to the upright 43 with a first end and are attached directly to each other with the second end. The upright 43 is also U-shaped, whereby the ends of the legs are attached to the first ends of the foot parts 46. In this embodiment, only one of the foot parts 46 of each foot 44, with the exception of that of the outermost leaning gate, is provided with a guide element 45 that can be slid over one of the foot parts 46 of an adjacent leaning gate 42. The leaning gates 42 are identical to each other, just as in the third embodiment.

The leaning gates 42 can also be slid apart from the storage position shown in figure 18, in which the leaning gates 42 with the feet 44 are slid into each other, to the operational position shown in figure 19, in which bicycles can be placed against the uprights 43.

Although the invention has been explained above with reference to the drawings, it should be noted that the invention is by no means limited to the embodiment shown in the drawings. The invention also extends to all embodiments deviating from the embodiment shown in the drawings within the framework defined by the claims. The leaning gates do not need to be provided with guide elements, but can be slidable across the surface, whereby in the fully extended position projections on the outside of the foot parts of a railing hook behind projections on the inside of the foot parts of a neighbouring railing in order to pull this neighbouring railing along when it is extended further.

## Claims

1. Bicycle parking device (11; 21; 31; 41) comprising a plurality of leaning gates (12; 22; 32; 42) against which bicycles can be placed, which leaning gates (12; 22; 32; 42) each comprise an upright (13; 23; 33; 43) and a foot (14; 24; 34; 44) to which the uprights (13; 23; 33; 43) are attached, which leaning gates (12; 22; 32; 42) are movable between an operational position in which bicycles can be placed against the uprights (13; 23; 33; 43) and a storage position in which no bicycles can be placed against the uprights (13; 23; 33; 43), **characterised in that** the bicycle parking device (11; 21; 31; 41) comprises a plurality of feet (14; 24; 34; 44) of which said foot (14; 24; 34; 44) forms part, each leaning gate (12; 22; 32; 42) having a separate foot (14; 24; 34; 44) which is attached to the upright (13; 23; 33; 43), and wherein the feet (14; 24; 34; 44) are slidable along each other.

2. Bicycle parking device (11; 21; 31; 41) according to claim 1, **characterised in that** each foot (14; 24; 34; 44) is provided with at least one guide element (15; 25; 35; 45) which is slidable in or over the foot (14; 24; 34; 44) of an adjacent leaning gate (12; 22; 32; 42).

3. Bicycle parking device (11; 21; 31; 41) according to claim 2, **characterised in that** the guide element (15; 25; 35; 45) is configured such that it can only slide in or over the foot (14; 24; 34; 44) of an adjacent leaning gate (12; 22; 32; 42) but cannot rotate relative to the foot (14; 24; 34; 44) of an adjacent leaning gate (12; 22; 32; 42).

4. Bicycle parking device (11; 21; 31; 41) according to claim 1, 2 or 3, **characterised in that** each foot (14; 24; 34; 44) extends on one side of the upright (13; 23; 33; 43).

5. Bicycle parking device (11; 21; 31; 41) according to claim 1, 2, 3 or 4, **characterised in that** each foot (14; 24; 34; 44) has two elongated foot parts (16; 26; 36; 46) which are each attached to the upright (13; 23; 33; 43) with a first end spaced apart from each other.

6. Bicycle parking device (11; 21; 41) according to claim 5, **characterised in that** the elongated foot parts (16; 26; 46) are attached to each other with the second end directly or via a connecting piece (17; 27).

7. Bicycle parking device (11; 21; 31) according to claim 5 or 6, **characterised in that** the elongated foot parts (16; 26; 36) are parallel to each other.

8. Bicycle parking device (41) according to claim 5 or 6, **characterised in that** the elongated foot parts (46) extend in a V-shape.

9. Bicycle parking device (11; 21; 31; 41) according to one of the preceding claims, **characterised in that** the upright (13; 23; 33; 43) of each leaning gate (12; 22; 32; 42) is U-shaped, with the ends of the legs being attached to the foot (14; 24; 34; 44).

10. Bicycle parking device (11; 21; 31; 41) according to one of the preceding claims, **characterised in that** parts of the uprights (13; 23; 33; 43) are detachably attached to each other so that the uprights (13; 23; 33; 43) can be interrupted to allow bicycles secured with a chain lock to be removed if necessary.

11. Bicycle parking facility (11) according to one of the preceding claims, **characterised in that** the bicycle parking facility (11) comprises a piece of street furniture (18) in which the leaning gates (12) are present in the storage position.
